# EUROPÄISCHE PATENTSCHRIFT

(11) **EP 3 771 827 B1**
(45) Veröffentlichungstag und Bekanntmachung des Hinweises auf die Patenterteilung: **28.12.2022**
(21) Anmeldenummer: 20187851.9
(22) Anmeldetag: 27.07.2020
(51) Int. Cl.: F04B 35/04, F04B 49/06, F04B 49/20, F04C 28/08, F04D 27/02

(54) **VERFAHREN ZUM BETREIBEN EINES KÄLTEMITTELKOMPRESSORS UND KÄLTEMITTELKOMPRESSORSYSTEM**
METHOD FOR OPERATING A COOLANT COMPRESSOR AND COOLANT COMPRESSOR SYSTEM
PROCÉDÉ DE FONCTIONNEMENT D'UN COMPRESSEUR DE RÉFRIGÉRANT ET SYSTÈME DE COMPRESSEUR DE RÉFRIGÉRANT

(30) Priorität: 01.08.2019 DE 102019211503
(43) Veröffentlichungstag der Anmeldung: 03.02.2021
(73) Patentinhaber: Robert Bosch GmbH, 70442 Stuttgart (DE)
(72) Erfinder: Pfeil, Dennis, 35394 Giessen (DE)

(56) Entgegenhaltungen:
- WO-A1-2014/117006
- CN-A- 104 912 787
- KR-A- 20040 087 761
- US-A- 5 355 691

## Beschreibung

### Stand der Technik

Kältemittelkompressoren kommen beispielsweise in Wärmepumpen, Klimaanlagen, Kaltwassersätzen oder Kühlgeräten zum Einsatz. Kältemittelkompressoren können mittels Kältemittelleitungen mit weiteren Komponenten wie Verdampfer, Verflüssiger, Expansionsvorrichtung zu einem kältemittelhydraulischen System verschaltet sein und dienen im Betrieb zur Kompression eines strömenden Kältemittels. Kältemittelkompressoren sind mechanisch, insbesondere motorisch, beispielsweise mittels eines Elektromotors oder eines Verbrennungsmotors, insbesondere drehzahlvariabel, angetrieben.

Im Allgemeinen üben etwaige Schädigungen von Maschinen einen Einfluss auf den resultierenden Betrieb aus. Diese Tatsache ermöglicht es, den Systemzustand von Anlagen und ihren Maschinen mithilfe spezieller physikalischer Diagnoseparameter zu überwachen und zu beurteilen. Bei Kältemittelkompressoren oder kältemittelhydraulischen Systemen wird dazu häufig die Temperatur am Austritt des Kompressors (Heißgastemperatur) verwendet. Sogenannte einparametrige Diagnosealgorithmen sind zwar grundsätzlich zur Diagnose von Kältemittelkompressoren geeignet, jedoch wird ihre Genauigkeit durch sich verändernde Betriebs- und Umgebungseinflüsse (beispielsweise Druck-, Temperatur- und Drehzahlveränderungen) stark beeinträchtigt.

Aus diesem Grunde empfiehlt es sich, weitere Informationen in Form von mehreren, verschiedenen Diagnoseparametern simultan zu verwenden. Die Berücksichtigung mehrerer Diagnoseparameter erschwert jedoch den Diagnoseprozess, da sich damit zwangsläufig der Analyseumfang erhöht, was wiederum zu längeren Analysezeiten führt.

Die Ähnlichkeitstheorie ist ein Fachbegriff der Physik und bezeichnet eine Theorie, bei der mit Hilfe dimensionsloser Kennzahlen ein physikalischer Vorgang auf einen Modellvorgang zurückgeführt wird. Diese Theorie wird vielfach sowohl vor dem Hintergrund theoretischer Betrachtungen als auch von Experimenten angewandt. Die Dimensionsanalyse ist ein mathematisches Verfahren, um das Zusammenspiel physikalischer Größen bei Naturphänomenen zu erfassen, ohne die einem physikalischen Vorgang zugrundeliegende Formel oder eine exakte Gesetzmäßigkeit zu kennen.

Die US 5355691 A offenbart einen Regler zur Einstellung der Leistung eines motorisch angetriebenen Fliehkraftverdichters mit variabler Leistung, wobei der Regler zur Einstellung der Leistung des Verdichters in Reaktion auf die Nachfrage bei gleichzeitiger Minimierung des Stromverbrauchs und Vermeidung von Überspannungsbedingungen angepasst ist.

Die WO 2014/117006 A1 offenbart ein Verfahren zur Detektion und Rückgewinnung von durch Strömungsabriss verursachter Regelinstabilität in einer Kälteanlage, die einen Fliehkraftverdichter, eine Kältemaschinensteuereinheit und ein oder mehrere Einlassleitschaufeln umfasst.

### Offenbarung der Erfindung

Die Erfindung betrifft ein Verfahren zum Betreiben eines Kältemittelkompressors, insbesondere eines drehzahlgeregelten Kältemittelkompressors. Die Erfindung ist gekennzeichnet durch die Schritte
a. Erfassen von Diagnoseparameterwerten von mindestens zwei einen Betrieb des Kältemittelkompressors charakterisierenden Diagnoseparametern;
b. Berechnen mindestens eines Diagnosekennzahlwerts mindestens einer Diagnosekennzahl aus den Diagnoseparameterwerten unter Verwendung der Ähnlichkeitstheorie mithilfe der Dimensionsanalyse;
c. Vergleichen des Diagnosekennzahlwerts mit mindestens einem Bezugswert;
d. Verändern mindestens einer Betriebsbedingung in Abhängigkeit eines Ergebnisses des Vergleichens.

Unter Diagnoseparameter sind insbesondere die problemrelevanten physikalischen Größen zu verstehen, die die Betriebseinflüsse oder die Umgebungseinflüsse des Kältemittelkompressors oder des verbundenen kältemittelhydraulischen Systems beschreiben. Die Diagnoseparameterwerte werden zum Beispiel messtechnisch erfasst oder aus gemessenen Werten abgeleitet.

Die Bildung von Diagnosekennzahlen unter Verwendung der Ähnlichkeitstheorie mithilfe der Dimensionsanalyse bietet eine vorteilhafte Möglichkeit zur Reduzierung des Analyseaufwandes, dabei werden die Informationen mehrerer Diagnoseparameter - ohne Informationsverlust - unter Berücksichtigung physikalischer Gesetzmäßigkeiten zu Diagnosekennzahlen zusammengefasst.

Der Wert der Diagnosekennzahl repräsentiert einen definierten Schädigungszustand des untersuchten Kältemittelkompressors. Die Diagnosekennzahl erlaubt eine Handhabung wie eine einparametrige Diagnosemessgröße (zum Beispiel Kennliniendiagnostik der Temperatur), verfügt jedoch über einen weitaus größeren Informationsgehalt und erhöht dadurch eine Prognosewahrscheinlichkeit, insbesondere über einen Schädigungszustand oder eine maximal zulässige Restlaufzeit des Kompressors. Darüber hinaus gestattet es die Diagnosekennzahl, den Einfluss von Betriebs- und Umgebungseinflüssen (zum Beispiel Umgebungstemperatur und Drehzahl des Kompressors) zu berücksichtigen.

Unter einem Bezugswert ist insbesondere ein Grenzwert oder Schwellenwert oder Anfangswert zu verstehen, mit dessen Hilfe der Diagnosekennzahlwert verglichen und bewertet werden kann. Ein Anfangswert ist ein Wert im neuwertigen Zustand des Kältemittelkompressors. Ein Grenzwert oder Schwellenwert kann ein vorgegebener Wert oder ein, insbesondere aus dem Anfangswert, berechneter Wert sein.

Der Bezugswert repräsentiert einen Schädigungszustand, beispielsweise den Zustand einer beginnenden oder bereits eingetretenen Schädigung, des Kältemittelkompressors.

Der Vergleich des Diagnosekennzahlwerts mit mindestens einem Bezugswert erlaubt ein Rückschließen auf Schädigungen oder einen Schädigungszustand wie zum Beispiel ein Verschleiß oder Ausfall an den Maschinen- oder Verdränger- oder Ventilelementen des Kompressors. Ferner erlaubt der Vergleich auch ein Erstellen einer Trendanalyse zum Schädigungszustand. Aus dem Trend kann eine wahrscheinlich verbleibende Restlaufzeit bis zu einem Ausfall des Kompressors abgeleitet und Gegenmaßnahmen getroffen bzw. Wartungspläne erstellt werden.

Mit dem Verändern mindestens einer Betriebsbedingung wird auf das Ergebnis des Vergleichs von Diagnosekennzahlwert und Bezugswert, beispielsweise ein Überschreiten oder Unterschreiten des Bezugswerts durch den Diagnosekennzahlwert, reagiert. Damit wird der Betrieb des Kältemittelkompressors an einen vorliegenden Schädigungszustand angepasst, beispielsweise zur Minimierung eines in Betracht zu ziehenden Schadensumfangs bei gleichzeitiger Maximierung einer Verfügbarkeit des Kompressors, und/oder zur besseren Planbarkeit von Wartungsarbeiten.

Eine vorteilhafte Ausgestaltung des Verfahrens ist dadurch gekennzeichnet, dass das Erfassen von Diagnoseparameterwerten ein zeitdiskretes Erfassen, insbesondere ein Messen, während des Kompressorbetriebs umfasst. Inbesondere werden die Diagnoseparameterwerte gleichzeitig, beziehungsweise innerhalb wiederholt auftretender, vorgebbarer, kleiner Messzeitintervalle, beispielsweise in der Größenordnung von einer Sekunde, gemessen.

Eine weitere vorteilhafte Ausgestaltung des Verfahrens ist gekennzeichnet durch den Schritt beziehungsweise die Schritte
- Bilden mindestens eines Diagnoseparametermittelwerts, insbesondere eines gleitenden Mittelwerts, aus mindestens zwei aufeinanderfolgenden Diagnoseparameterwerten; und/oder
- Schreiben der Diagnoseparameterwerte und/oder des Diagnoseparametermittelwerts in einen Datenspeicher;
- wobei der Diagnosekennzahlwert aus dem Diagnoseparametermittelwert berechnet wird.

Durch die Mittelwertbildung wird eine übermäßige Beeinflussung des Diagnosekennzahlwerts durch eventuell auftretende, einzelne Messabweichungen bei der Erfassung von Diagnoseparameterwerten vermieden.

Eine weitere vorteilhafte Ausgestaltung des Verfahrens ist dadurch gekennzeichnet, dass die Diagnoseparameter, die den Kompressor beziehungsweise das den Kompressor durchströmende Kältemittel betreffen, ausgewählt sind aus der in folgender Tabelle wiedergegebenen Parametergruppe (Effektivwert der Schallemission (*x*) des Kompressors, elektrische Stromaufnahme (*l*) des Kompressors, geförderter Massenstrom (*m*) des Kältemittels, Verdichtungsendtemperatur *(T_{H})* des Kältemittels, Verdampfungsdruck (*p*₀) des Kältemittels, Verflüssigungsdruck (*p*_{C}) des Kältemittels, Kompressordrehzahl (*n*) des Kompressors, Umgebungstemperatur (*T_{U}*) der Umgebung des Kompressors).

| Nr. | Diagnoseparameter | Formelzeichen | Dimension |
|---|---|---|---|
| 1 | Effektivwert der Schallemission (ZG) | *x* | *M L² T⁻³ I⁻¹* |
| 2 | elektrische Stromaufnahme (ZG) | *l* | *I* |
| 3 | geförderter Massenstrom (ZG) | *m* | *M T⁻¹* |
| 4 | Verdichtungsendtemperatur (ZG) | *T_{H}* | ϑ |
| 5 | Verdampfungsdruck (EG) | *p*₀ | *M L⁻¹ T⁻²* |
| 6 | Verflüssigungsdruck (EG) | *p_{C}* | *M L⁻¹ T⁻²* |
| 7 | Kompressordrehzahl (EG) | *n* | *T⁻¹* |
| 8 | Umgebungstemperatur (EG) | *Tu* | ϑ |

Die Herleitung der dimensionslosen Diagnosekennzahlen beruht auf problemrelevanten physikalischen Größen (Diagnoseparameter), die aus einer zuverlässigkeitstechnischen Systemanalyse des Kältemittelkompressors gewonnen werden. Für Kältemittelkompressoren lassen sich die in der vorstehenden Tabelle aufgeführten acht physikalischen Größen (Diagnoseparameter) in einer Relevanzliste zusammenfassen, die in den im Folgenden definierten, dimensionslosen Kennzahlen enthalten sind. Die physikalischen Größen werden hinsichtlich Zielgrößen (ZG) und Einflussgrößen (EG) zu unterschieden. Mithilfe eines speziellen Matrizenkalküls lassen sich die aufgeführten physikalischen Größen mit ihren Dimensionen gemäß den Gesetzen der Ähnlichkeitstheorie in dimensionslose Kennzahlen (Diagnosekennzahlen) überführen.

Erläuterung zu den Dimensionsangaben: *M* = Masse, *L* = Länge, *T* = Zeit, *l* = elektrische Stromstärke, ϑ = Temperatur.

Eine weitere vorteilhafte Ausgestaltung des Verfahrens ist dadurch gekennzeichnet, dass der Schritt Berechnen mindestens eines Diagnosekennzahlwerts ein Zusammenfassen mehrerer Diagnoseparameterwerte und/oder Diagnoseparametermittelwerte zu mindestens einem Diagnosekennzahlwert, insbesondere unter Berücksichtigung physikalischer Gesetzmäßigkeiten, umfasst.

Eine weitere vorteilhafte Ausgestaltung des Verfahrens ist gekennzeichnet durch den Schritt Berechnen und/oder Speichern mindestens eines Anfangswerts des Diagnosekennzahlwerts aus den Diagnoseparameterwerten, wobei der Anfangswert der Diagnosekennzahlwert im neuwertigen Zustand des Kältemittelkompressors ist. Auch die Diagnoseparameterwerte haben im neuwertigen Zustand des Kältemittelkompressors einen Anfangswert. Das Berechnen des Anfangswerts des Diagnosekennzahlwerts beruht insbesondere auf den Anfangswerten der Diagnoseparameterwerte.

Eine weitere vorteilhafte Ausgestaltung des Verfahrens ist gekennzeichnet durch den Schritt Normieren des Diagnosekennzahlwerts durch Verhältnisbildung des Diagnosekennzahlwerts mit seinem Anfangswert. Mittels des so gewonnenen normierten Diagnosekennzahlwerts ist auch eine Bewertung der relativen Abweichung des Diagnosekennzahlwerts von seinem Anfangswert möglich.

Vorteilhaft ist eine Ausgestaltung des Verfahrens, wobei *Π₁ = (x p₀² l)*/*(m³ n⁴)* eine erste Diagnosekennzahl definiert.

Die erste Diagnosekennzahl *Π*₁ berechnet sich demnach aus dem Produkt von Effektivwert der Schallemission *x,* zweiter Potenz des Verdampfungsdrucks p₀ und elektrischer Stromaufnahme *l,* geteilt durch das Produkt von dritter Potenz des geförderten Massenstroms m und vierter Potenz der Kompressordrehzahl n.

Vorteilhaft ist eine weitere Ausgestaltung des Verfahrens, wobei *Π₂ = p_{C}*/*p₀* eine zweite Diagnosekennzahl definiert.

Die zweite Diagnosekennzahl *Π₂* berechnet sich demnach aus dem Verflüssigungsdruck *p_{C}* geteilt durch den Verdampfungsdruck p₀.

Die zweite Diagnosekennzahl *Π₂* stellt das bekannte Verdichtungsverhältnis des Kompressors dar.

Vorteilhaft ist eine weitere Ausgestaltung des Verfahrens, wobei *Π₃ = T_{H}*/*T_{U}* eine dritte Diagnosekennzahl definiert.

Die dritte Diagnosekennzahl *Π₃* berechnet sich demnach aus der Verdichtungsendtemperatur *T_{H}* geteilt durch die Umgebungstemperatur *T_{U}.*

Mithilfe der dritten Diagnosekennzahl *Π₃* kann der Einfluss der Umgebung auf den Temperaturhaushalt des Kompressors bei der Diagnose berücksichtigt werden.

Mithilfe der vorgenannten dimensionslosen Kennzahlen ist eine Diagnose von drehzahlgeregelten Kompressoren bei beliebigen Betriebsbedingungen und beliebiger Kompressordrehzahl möglich.

Vorteilhaft ist eine weitere Ausgestaltung des Verfahrens, wobei *Ψ = (x p₀²* l *Π₃)*/*(m³ n⁴)* eine vierte Diagnosekennzahl definiert.

Die vierte Diagnosekennzahl *Ψ* berechnet sich demnach aus der ersten Diagnosekennzahl *Π₁* multipliziert mit der dritten Diagnosekennzahl *Π₃.*

Diese multiplikative Verknüpfung vereint nunmehr alle zur Diagnose relevanten Parameter. Eintretende Schädigungen, z. B. Verschleiß an den Maschinen- oder Verdrängerelementen des Kompressors, führen so zu einem Anstieg der Kennzahl Ψ.

Vorteilhaft ist eine weitere Ausgestaltung des Verfahrens, wobei *Σ = Ψ₀*/*Ψ* eine fünfte Diagnosekennzahl definiert, wobei *Ψ₀* der Anfangswert der vierten Diagnosekennzahl *Ψ* im neuwertigen Zustand des Kältemittelkompressors ist.

Die fünfte Diagnosekennzahl *Σ* berechnet sich demnach aus dem Anfangswert *Ψ₀* der vierten Diagnosekennzahl *Ψ,* geteilt durch die vierte Diagnosekennzahl *Ψ.*

Für eine Trendanalyse wird die vierte Diagnosekennzahl *Ψ* auf einen Vergleichswert, die fünfte Diagnosekennzahl *Σ,* umgerechnet. So führt eine Normierung der vierten Diagnosekennzahl *Ψ auf* ihren Anfangswert *Ψ₀* zum Betriebsdauer-Zeitpunkt *t* = 0 (neuwertiger Zustand des Kältemittelkompressors) zu dem vorstehend aufgeführten Quotienten *Σ,* der als Funktionserfüllungsgrad des Kompressors interpretiert werden kann. Der Funktionserfüllungsgrad ist bei einem konstanten Verdichtungsverhältnis *(Π₂* = konst.) lediglich von der Betriebsdauer t des Kältemittelkompressors bzw. der Kältemaschine abhängig: *Σ = f(t, Π₂).*

Zur technischen Diagnose des Systemzustandes des Kältemittelkompressors müssen die Diagnoseparameter (Messgrößen, siehe Tabelle) während des Betriebes zeitdiskret erfasst und zu den hergeleiteten Diagnosekennzahlen weiterverarbeitet werden. Über- oder unterschreitet die Diagnosekennzahl *Ψ* und/oder der Funktionserfüllungsgrad *Σ* einen zuvor festgelegten Bezugswert, erfolgt eine Reaktion des Kältemittelkompressorsystems und es können prophylaktische Maßnahmen zur Sicherstellung des Betriebes durchgeführt werden.

Eine weitere vorteilhafte Ausgestaltung des Verfahrens ist dadurch gekennzeichnet, dass bei einem Überschreiten und/oder Unterschreiten des mindestens einen Bezugswerts durch den mindestens einen Diagnosekennzahlwert, und/oder bei einem Abweichen des Diagnosekennzahlwerts von dem Bezugswert in einem vorgegebenen Maß, eine Reaktion des Kältemittelkompressorsystems erfolgt, insbesondere
- eine Information an einen Betreiber des Kältemittelkompressors ausgegeben und/oder in einen Datenspeicher geschrieben wird, und/oder
- eine Betriebsweise, insbesondere eine Kompressordrehzahl und/oder eine Ventilstellung, verändert wird, und/oder
- ein zu definierender Kompressordrehzahlbereich ausgespart wird, und/oder
- eine Empfehlung zu einem Wartungsplan, insbesondere einen Tausch und/oder eine Reinigung und/oder eine Instandhaltung von Komponenten des Kältemittelkompressors betreffend, erstellt und ausgegeben wird, und/oder
- der Kältemittelkompressor abgeschaltet wird.

Insbesondere können mehrere Diagnosekennzahlwerte gleichzeitig überwacht und in einer kombinierten Auswertung zur Analyse eines Schädigungszustands herangezogen werden.

Die Information kann eine Benachrichtigung, eine Warnung und/oder ein Alarm sein und mindestens einen Wert und/oder einen Hinweis auf den erkannten Schädigungszustand umfassen. Die in einen Datenspeicher geschriebene Information kann weiter verarbeitet, insbesondere auch nachträglich ausgelesen, werden. Eine Betriebsweise ändern bedeutet beispielsweise ein Schonen des Kompressors und/oder des kältemittelhydraulischen Systems und stellt einen Eingriff in den Betrieb dar, der über eine übliche Variabilität einer Leistungsanforderung hinausgeht. Ein zu definierender Kompressordrehzahlbereich kann beispielsweise ein Drehzahlbereich mit bekanntermaßen erhöhten Resonanzschwingungen und/oder erhöhten Schallemissionen sein; diesen Kompressordrehzahlbereich im Betrieb auszusparen kann bedeuten, die beispielsweise mechanischen Belastungen zu verringern und eine mögliche Restlaufzeit zu verlängern. Als beispielsweise letzte Reaktion auf einen erkannten Schädigungszustand kann der Kompressor ausgeschaltet werden.

Die Erfindung betrifft ferner ein Kältemittelkompressorsystem mit einem, insbesondere drehzahlgeregelten, Kältemittelkompressor. Die Erfindung ist dadurch gekennzeichnet, dass das Kältemittelkompressorsystem Mittel zur Durchführung eines wie vorstehend beschriebenen Verfahrens umfasst.

Insbesondere können diese Mittel zur Durchführung eines wie vorstehend beschriebenen Verfahrens mindestens ein Erfassungsmittel zum Erfassen von Diagnoseparameterwerten, beispielsweise Sensoren; mindestens ein Berechnungsmittel zum Berechnen mindestens eines Diagnosekennzahlwerts; mindestens ein Datenverarbeitungsmittel zum Vergleichen, Analysieren und/oder Bewerten des Diagnosekennzahlwerts; mindestens ein Steuer- und/oder Regelungsmittel zum Erfassen von Diagnoseparameterwerten und/oder zum Überwachen und/oder Verändern mindestens einer Betriebsbedingung; mindestens einen Read-and-Write-Datenspeicher zur, insbesondere elektronischen, Speicherung von Diagnoseparameterwerten, Diagnosekennzahlwerten, Informationen, Wartungsplänen; und/oder mindestens ein Ausgabemittel zum Ausgeben einer Information oder eines Wartungsplanes umfassen.

## Patentansprüche

1. Verfahren zum Betreiben eines Kältemittelkompressors, insbesondere eines drehzahlgeregelten Kältemittelkompressors,
**gekennzeichnet durch** die Schritte
a. Erfassen von Diagnoseparameterwerten von mindestens zwei einen Betrieb des Kältemittelkompressors charakterisierenden Diagnoseparametern;
b. Berechnen mindestens eines Diagnosekennzahlwerts mindestens einer Diagnosekennzahl aus den Diagnoseparameterwerten unter Verwendung der Ähnlichkeitstheorie mithilfe der Dimensionsanalyse;
c. Vergleichen des Diagnosekennzahlwerts mit mindestens einem Bezugswert;
d. Verändern mindestens einer Betriebsbedingung in Abhängigkeit eines Ergebnisses des Vergleichens.

2. Verfahren nach Anspruch 1,
**dadurch gekennzeichnet, dass**
das Erfassen von Diagnoseparameterwerten ein zeitdiskretes Erfassen, insbesondere ein Messen, während des Kompressorbetriebs umfasst.

3. Verfahren nach Anspruch 1 oder 2,
**gekennzeichnet durch** den Schritt
• Bilden mindestens eines Diagnoseparametermittelwerts, insbesondere eines gleitenden Mittelwerts, aus mindestens zwei aufeinanderfolgenden Diagnoseparameterwerten, und/oder
• Schreiben der Diagnoseparameterwerte und/oder des Diagnoseparametermittelwerts in einen Datenspeicher,
• wobei der Diagnosekennzahlwert aus dem Diagnoseparametermittelwert berechnet wird.

4. Verfahren nach einem der vorstehenden Ansprüche,
**dadurch gekennzeichnet, dass**
die Diagnoseparameter ausgewählt sind aus der Gruppe Effektivwert der Schallemission (x), elektrische Stromaufnahme (I), geförderter Massenstrom (m), Verdichtungsendtemperatur (T_{H}), Verdampfungsdruck (p₀), Verflüssigungsdruck (p_{C}), Kompressordrehzahl (n), Umgebungstemperatur (Tu).

5. Verfahren nach einem der vorstehenden Ansprüche,
**dadurch gekennzeichnet, dass**
der Schritt Berechnen mindestens eines Diagnosekennzahlwerts ein Zusammenfassen mehrerer Diagnoseparameterwerte und/oder Diagnoseparametermittelwerte zu mindestens einem Diagnosekennzahlwert, insbesondere unter Berücksichtigung physikalischer Gesetzmäßigkeiten, umfasst.

6. Verfahren nach einem der vorstehenden Ansprüche,
**gekennzeichnet durch** den Schritt
Berechnen und/oder Speichern mindestens eines Anfangswerts des Diagnosekennzahlwerts aus den Diagnoseparameterwerten, wobei der Anfangswert der Diagnosekennzahlwert im neuwertigen Zustand des Kältemittelkompressors ist.

7. Verfahren nach einem der vorstehenden Ansprüche,
**gekennzeichnet durch** den Schritt
Normieren des Diagnosekennzahlwerts durch Verhältnisbildung des Diagnosekennzahlwerts mit seinem Anfangswert.

8. Verfahren nach einem der Ansprüche 4 bis 7,
wobei Π₁ = (x p₀² l)/(m³ n⁴) eine erste Diagnosekennzahl ist.

9. Verfahren nach einem der Ansprüche 4 bis 8,
wobei Π₂ = p_{C} / p₀ eine zweite Diagnosekennzahl ist.

10. Verfahren nach einem der Ansprüche 4 bis 9,
wobei Π₃ = T_{H}/ T_{U} eine dritte Diagnosekennzahl ist.

11. Verfahren nach einem der Ansprüche 4 bis 10,
wobei Ψ = (x p₀² | Π₃)/(m³ n⁴) eine vierte Diagnosekennzahl ist.

12. Verfahren nach einem der Ansprüche 4 bis 11,
wobei Σ = Ψ₀ / Ψ eine fünfte Diagnosekennzahl ist,
wobei Ψ₀ der Anfangswert der vierten Diagnosekennzahl Ψ im neuwertigen Zustand des Kältemittelkompressors ist.

13. Verfahren nach einem der vorstehenden Ansprüche,
**dadurch gekennzeichnet, dass**
bei einem Überschreiten und/oder Unterschreiten des mindestens einen Bezugswerts durch den Diagnosekennzahlwert, und/oder bei einem Abweichen des Diagnosekennzahlwerts von dem Bezugswert in einem vorgegebenen Maß,
• eine Information an einen Betreiber des Kältemittelkompressors ausgegeben und/oder in einen Datenspeicher geschrieben wird, und/oder
• eine Betriebsweise, insbesondere eine Kompressor-Drehzahl und/oder eine Ventilstellung, verändert wird, und/oder
• ein zu definierender Kompressor-Drehzahlbereich ausgespart wird, und/oder
• eine Empfehlung zu einem Wartungsplan, insbesondere einen Tausch und/oder eine Reinigung und/oder eine Instandhaltung von Komponenten des Kältemittelkompressors betreffend, erstellt und ausgegeben wird, und/oder
• der Kältemittelkompressor abgeschaltet wird.

14. Kältemittelkompressorsystem mit einem, insbesondere drehzahlgeregelten, Kältemittelkompressor,
**dadurch gekennzeichnet, dass** es Mittel zur Durchführung eines Verfahrens nach einem der Ansprüche 1 bis 13 umfasst.

## Claims

1. Method for operating a refrigerant compressor, in particular a speed-controlled refrigerant compressor, **characterized by** the steps of
a. recording diagnosis parameter values of at least two diagnosis parameters characterizing operation of the refrigerant compressor;
b. calculating at least one diagnosis indicator value of at least one diagnosis indicator from the diagnosis parameter values using the similarity theory by means of dimensional analysis;
c. comparing the diagnosis indicator value with at least one reference value;
d. changing at least one operating condition depending on a result of the comparison.

2. Method according to Claim 1,
**characterized in that**
recording diagnosis parameter values comprises time-discrete recording, in particular measurement, during compressor operation.

3. Method according to Claim 1 or 2,
**characterized by** the steps of
• forming at least one diagnosis parameter mean value, in particular a sliding mean value, from at least two successive diagnosis parameter values, and/or
• writing the diagnosis parameter values and/or the diagnosis parameter mean value into a data memory,
• wherein the diagnosis indicator value is calculated from the diagnosis parameter mean value.

4. Method according to one of the preceding claims, **characterized in that**
the diagnosis parameters are selected from the group comprising the effective value of the noise emission (x), electrical current consumption (I), required mass flow (m), compression end temperature (T_{H}), evaporation pressure (p₀), liquefaction pressure (p_{C}), compressor speed (n) and ambient temperature (T_{U}).

5. Method according to one of the preceding claims, **characterized in that**
the step of calculating at least one diagnosis indicator value comprises combining a plurality of diagnosis parameter values and/or diagnosis parameter mean values to form at least one diagnosis indicator value, in particular taking into consideration physical laws.

6. Method according to one of the preceding claims, **characterized by** the step of
calculating and/or storing at least one starting value of the diagnosis indicator value from the diagnosis parameter values, wherein the starting value is the diagnosis indicator value in the new state of the refrigerant compressor.

7. Method according to one of the preceding claims, **characterized by** the step of
standardizing the diagnosis indicator value by calculating the ratio of the diagnosis indicator value to its starting value.

8. Method according to one of Claims 4 to 7,
wherein **Π₁** = ***(x p₀*²*I*)/(*m*³*n*⁴)** is a first diagnosis indicator.

9. Method according to one of Claims 4 to 8,
wherein **Π₂ = *p_{C}*/*p*₀** is a second diagnosis indicator.

10. Method according to one of Claims 4 to 9,
wherein Π₃ = *T_{H}*/*T_{U}* is a third diagnosis indicator.

11. Method according to one of Claims 4 to 10,
wherein **Ψ** = ***(x p₀²* I** Π₃)/(*m*³*n*⁴) is a fourth diagnosis indicator.

12. Method according to one of Claims 4 to 11,
wherein **Σ = Ψ₀/Ψ** is a diagnosis indicator,
where **Ψ₀** is the starting value of the fourth diagnosis indicator **Ψ** in the new state of the refrigerant compressor.

13. Method according to one of the preceding claims, **characterized in that**,
when the at least one reference value is exceeded and/or undershot by the diagnosis indicator value and/or when the diagnosis indicator value differs from the reference value by a prescribed amount,
• an item of information is output to an operator of the refrigerant compressor and/or is written into a data memory, and/or
• a mode of operation, in particular a compressor speed and/or a valve position, is changed, and/or
• a compressor speed range to be defined is left out, and/or
• a recommendation to form a service plan, in particular regarding replacing and/or cleaning and/or servicing components of the refrigerant compressor, is created and output, and/or
• the refrigerant compressor is turned off.

14. Refrigerant compressor system comprising an, in particular speed-controlled, refrigerant compressor, **characterized in that** it comprises means for carrying out a method according to one of Claims 1 to 13.

## Revendications

1. Procédé permettant de faire fonctionner un compresseur de réfrigérant, en particulier un compresseur de réfrigérant à régulation de vitesse de rotation,
**caractérisé par** les étapes consistant à
a. détecter des valeurs de paramètre de diagnostic d'au moins deux paramètres de diagnostic caractérisant un fonctionnement du compresseur de réfrigérant ;
b. calculer au moins une valeur de caractéristique de diagnostic d'au moins une caractéristique de diagnostic parmi les valeurs de paramètre de diagnostic en utilisant la théorie de la similitude à l'aide de l'analyse dimensionnelle ;
c. comparer la valeur de caractéristique de diagnostic avec au moins une valeur de référence ;
d. modifier au moins une condition de fonctionnement en fonction d'un résultat de la comparaison.

2. Procédé selon la revendication 1, **caractérisé en ce que** la détection de valeurs de paramètre de diagnostic comprend une détection à valeurs discrètes en temps, en particulier une mesure, pendant le fonctionnement du compresseur.

3. Procédé selon la revendication 1 ou 2, **caractérisé par** l'étape consistant à
• former au moins une moyenne de paramètres de diagnostic, en particulier une moyenne mobile, sur au moins deux valeurs de paramètre de diagnostic consécutives, et/ou
• écrire les valeurs de paramètre de diagnostic et/ou la moyenne de paramètres de diagnostic dans une mémoire de données,
• dans lequel la valeur de caractéristique de diagnostic est calculée à partir de la moyenne de paramètres de diagnostic.

4. Procédé selon l'une quelconque des revendications précédentes, **caractérisé en ce que** les paramètres de diagnostic sont sélectionnés dans le groupe comprenant la valeur effective de l'émission sonore (x), la consommation de courant électrique (I), le débit massique refoulé (m), la temps finale de compression (T_{H}), la pression d'évaporation (p₀), la pression de condensation (p_{C}), la vitesse de rotation du compresseur (n), la température ambiante (T_{U}).

5. Procédé selon l'une quelconque des revendications précédentes, **caractérisé en ce que** l'étape consistant à calculer au moins une valeur de caractéristique de diagnostic comprend un regroupement de plusieurs valeurs de paramètre de diagnostic et/ou de moyennes de paramètres de diagnostic en au moins une valeur de caractéristique de diagnostic, en particulier en tenant compte des lois physiques.

6. Procédé selon l'une quelconque des revendications précédentes, **caractérisé par** l'étape consistant à calculer et/ou à stocker au moins une valeur initiale de la valeur de caractéristique de diagnostic à partir des valeurs de paramètre de diagnostic, dans lequel la valeur initiale de la valeur de caractéristique de diagnostic correspond à l'état neuf du compresseur de réfrigérant.

7. Procédé selon l'une quelconque des revendications précédentes, **caractérisé par** l'étape consistant à normaliser la valeur de caractéristique de diagnostic par l'établissement d'un rapport entre la valeur de caractéristique de diagnostic et sa valeur initiale.

8. Procédé selon l'une quelconque des revendications 4 à 7, dans lequel π₁ = (x p₀² I)/(m³ n⁴) est une première caractéristique de diagnostic.

9. Procédé selon l'une quelconque des revendications 4 à 8, dans lequel π₂ = p_{C}/p₀ est une deuxième caractéristique de diagnostic.

10. Procédé selon l'une quelconque des revendications 4 à 9, dans lequel π₃ = T_{H}/T_{U} est une troisième caractéristique de diagnostic.

11. Procédé selon l'une quelconque des revendications 4 à 10, dans lequel Ψ = (x p₀² I π₃)/(m³ n⁴) est une quatrième caractéristique de diagnostic.

12. Procédé selon l'une quelconque des revendications 4 à 11,
dans lequel Σ = Ψ₀/Ψ est une cinquième caractéristique de diagnostic,
dans lequel Ψ₀ est la valeur initiale de la quatrième caractéristique de diagnostic *Ψ* à l'état neuf du compresseur de réfrigérant.

13. Procédé selon l'une quelconque des revendications précédentes, **caractérisé en ce qu'**en cas de dépassement et/ou de soupassement de ladite au moins une valeur de référence par la valeur de caractéristique de diagnostic, et/ou en cas d'écart de la valeur de caractéristique de diagnostic par rapport à la valeur de référence dans une mesure prédéfinie
• une information est émise à un opérateur du compresseur de réfrigérant et/ou est inscrite dans une mémoire de données, et/ou
• un mode de fonctionnement, en particulier une vitesse de rotation du compresseur et/ou une position de vanne, est modifié, et/ou
• une plage de vitesse de rotation du compresseur à définir est réservée, et/ou
• une recommandation au sujet d'un plan de maintenance, concernant en particulier un remplacement et/ou un nettoyage et/ou l'entretien des composants du compresseur de réfrigérant, est créée et émise, et/ou
• le compresseur de réfrigérant est arrêté.

14. Système de compresseur de réfrigérant comprenant un compresseur de réfrigérant, en particulier à régulation de vitesse de rotation, **caractérisé en ce qu'**il comprend des moyens pour exécuter un procédé selon l'une quelconque des revendications 1 à 13.
